(19) Europäisches Patentamt
European Patent Office
Office européen des brevets

(11) EP 0 514 438 B1

(12) **EUROPEAN PATENT SPECIFICATION**

(45) Date of publication and mention of the grant of the patent:
**31.01.1996 Bulletin 1996/05**

(21) Application number: **91903853.9**

(22) Date of filing: **06.02.1991**

(51) Int Cl.6: **G02F 1/35**, C08G 79/00, C08K 5/00

(86) International application number:
**PCT/GB91/00184**

(87) International publication number:
**WO 91/12555 (22.08.1991 Gazette 1991/19)**

(54) **OPTICAL SWITCHES**
OPTISCHE SCHALTER
COMMUTATEURS OPTIQUES

(84) Designated Contracting States:
**AT BE CH DE DK ES FR GB GR IT LI LU NL SE**

(30) Priority: **06.02.1990 GB 9002626**

(43) Date of publication of application:
**25.11.1992 Bulletin 1992/48**

(73) Proprietor:
**BRITISH TELECOMMUNICATIONS public limited company**
**London EC1A 7AJ (GB)**

(72) Inventors:
- **WINTER, Christopher Simon**
  **Ipswich, Suffolk IP5 7RE (GB)**
- **OLIVER, Stephen Nigel**
  **Felixstowe, Suffolk IP11 9PL (GB)**
- **RUSH, James Douglas**
  **Ipswich, Suffolk IP5 7TL (GB)**
- **UNDERHILL, Allan Edward**
  **Bangor, Gwynedd (GB)**
- **HILL, Callum Aidan Stephen**
  **Penisarwaun, Gwynedd LL55 3DB (GB)**

(74) Representative: **Leng, Francis Edward et al**
**London WC1E 6BA (GB)**

(56) References cited:
**EP-A- 0 208 258** **EP-A- 0 223 336**
**DE-A- 1 941 253** **DE-A- 3 800 085**

- **Macromolecules, vol. 23, 1990, (Easton,US) F.Wang et al.: "Soluble and electroactive nickel bis(dithiolene) polymers prepared via metal complexation polymerization",pages 3219-3225**
- **Macromolecules. vol. 21, 1988 (Easton,US) F.Wang et al.: "Soluble and electroactive nickel bis(dithiolene) complex polymers" pages 2887-2889**
- **IEEE Journal of Quantum Electronics, volume 18, no. 10, October 1982, IEEE, S. M. Jensen: "The non-linear coherent coupler", pages 1580-1583, see the whole document**
- **Proceedings of the S.P.I.E., volume 971, August 1988 (San Diego, US) J.F. Nicoud: "New materials for second harmonic generation: tentative control of non-centrosymmetry in organic crystals", pages 68-75, see chapter 2.3 oganometallics**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 514 438 B1

Printed by Jouve, 75001 PARIS (FR)

## Description

This invention relates to optical switches and, more specifically, to switches in which an optical signal is switched under the control of actuating radiation at optical wavelengths. For example, a signal having a wavelength in the range 500nm to 2000nm is switched by actuating radiation having a wavelength in the range 500nm to 2000nm.

In telecommunications it is usually essential to distinguish between an optical "signal", ie the telecommunications traffic which is usually at 1. 3μm or 1. 5μm and control radiation. This requirement can be achieved by using different wavelengths so that the signals can be separated, eg by suitable filters.

In other applications, eg image processing and optical composition, it may not be possible to distinguish two categories of signal and only one wavelength will be used. It is often convenient to regard the switch as a threshold detector and an EXCLUSIVE-OR-gate could be constructed in this way.

The optical switches usually take the form of waveguiding structures having one or more path regions. The article by S Jensen, IEEE Journal of Quantum Electronics, Volume QE-18 (1982), pages 1580-1583 discusses non-linear coherent couplers for use in optical processing. The paper does not explicitly identify the device as a switch and if it is a switch a control mechanism for actuating it is not mentioned.

Integrated devices comprising several switches at close proximity are also possible. Separate path regions may be needed for signals and actuating radiation. The switching is achieved by changing the refractive index of critical regions located in either a path region and/or cladding regions, eg a critical region may be located between two path regions. To effect the switching, each critical region is composed of operative material which is sensitive to the actuating radiation. The architectures of a wide variety of optical switches have already been established but the chemical nature of the active ingredient is clearly important; for example, the active ingredient should display sufficiently large changes of refractive index for practical intensities of actuating radiation and the changes should occur quickly when the actuating radiation is switched on or off. The selection of active ingredient is a problem.

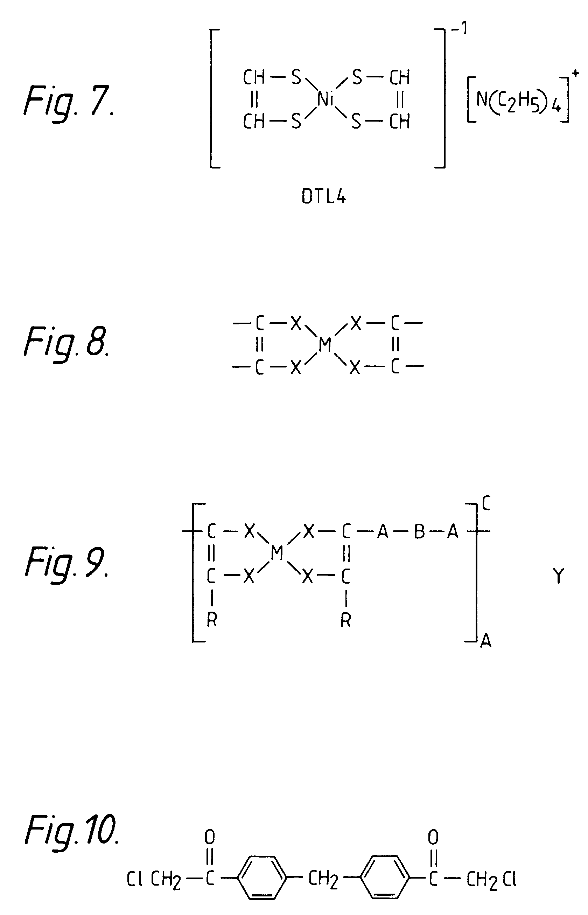

This invention selects a metal dithiolene as the active ingredient. These dithiolenes are tetravalent groups each having two five-membered rings as shown in Figure 8 of the drawings.

In Figure 8, M (which is part of both five-membered rings), is selected from Ni, Pt, Pd and Cu. The X groups, any two of which may be the same or different, are selected from S and Se. There are four unsatisfied bonds in Figure 8 because the group is tetravalent. The dithiolene grouping may be electrically neutral or it may have a charge of -1 (minus one). This charge is represented by C in this specification and when C = -1 a cation is needed to confer electrical neutrality.

When all the free valencies of Figure 8 are satisfied with monovalent groups a molecule with one dithiolene grouping results. Free valencies may also be satisfied with divalent groups to produce molecules with a plurality of dithiolene groups, e.g. polymeric compounds. Where a molecule includes a plurality of dithiolene groups each group has its own C-value, the C-value of the complete molecule is the sum of the individual values. Cations are needed to balance the total C-value. If each dithiolene grouping is netural the complete molecule will be neutral. In a compound with more than one M atom, any two may be the same or different.

It is the grouping illustrated in Figure 8 which constitutes the functional part of the molecule.

It provides a delocalised electron system which gives rise to the switching properties. The central metal atom, ie Ni, Pt, Pd or Cu, affects the nature of this delocalisation. The groups attached to the free valencies also have a slight effect on the delocalisation but their major effect is on the energy levels and, therefore, on the wavelength of the absorption bands. Thus they are selected so that there is an absorption band close to the operational wavelength. Changing them enables fine tuning to be achieved. The preferred dithiolenes have the general formula 1 (which is shown in Figure 1 of the drawings) wherein:

(A) the R groups, any two of which may be the same or different, are selected so as to tune the absorption bands of the molecule for use at the operational wavelength, and/or to act as bridges to link molecules together;
(B) the X groups, any two of which may be the same or different, are selected from S and Se, preferably all the X groups are S;
(C) M is selected from Ni, Pt, Pd and Cu;
(D) C = -1 or 0; and
(E)

(i) when C = -1, Y is a cation to render the molecule electrically neutral; preferably Y is selected from ammonium, substituted ammonium, $Na^+$, $Li^+$ and $K^+$, or
(ii) when C = 0, Y is absent (since the molecule is neutral there is no charge to balance).

Particularly suitable R-groups include:

(i) hydrogen atoms;

(ii) alkyl groups or halogenated alkyl groups with 1 to 10 carbon atoms, said groups being connected directly to the ring;
(iii) alkyl groups or halogenated alkyl groups with 1 to 10 carbon atoms connected to the ring via a bridge selected from -O-, $-C_6H_4-$ and -NH-;
(iv) cyanide radicals;
(v) amine groups, optionally substituted with two alkyl groups having not more than 15 carbon atoms in total;
(vi) Phenyl groups, optionally substituted with Br, $OCH_3$, $N(CH_3)_2$, $CH_3$, Cl, F;
(vii) heterocyclic groups;
(viii) halogen atoms.
(ix) bridge groups preferably selected from alkylene or halogenated alkylene groups with 1 - 10 carbon atoms or said groups with one or two terminal groups selected from
-O-, $-C_6H_4-$, and -NH-.

Some examples of specific compounds, in which M - Ni, X = S, C = 0 and all four R-groups take the same value, are given below (λ is the wavelength of the absorption band).

| λnm | R-groups |
|---|---|
| 720 | hydrogen |
| 774 | methyl |
| 866 | phenyl |
| 982 | 2-thienyl |
| 1120 | 4-(dimethyl amino)phenyl |
| 1270 | Juolidene |
| 1370 | 3 -N, N'-diethyletrahydroquinazoyl |

Preferred polymeric dithiolenes are shown in Figure 9 wherein M, X, and R (any two of which may be the same or different) are as defined above and
B is an alkylene or halogenated alkylene groups with 1 - 10 carbon atoms, A is selected from direct bonds, -O-, $-C_6H_4-$ and -NH-.

C is 0 or -1 at each occurence of M and n is 2 to 100.

The number of cations (Y) balances the total charge. When the total is zero Y is absent.

The critical regions may consist of a pure dithiolene or a mixture of dithiolenes with one another or with a host medium (such as an organic polymer) transparent to both signal and actuating radiation.

The dithiolene/host mixture can be regarded as a solid solution of the dithiolene in the host or as a glass-phase medium having a structure similar to the inorganic, eg silica and halide, glasses. Specific hosts which are particularly suitable include polyacrylates, polymethacrylates such as polymethymethacrylate, polycarbonates, polyisobutylene, polyethylene terephthalate, polystyrene and polysiloxane.

The host material exerts the primary control over transmission properties and especially the host material defines the refractive index of the critical region but the host material is passive so far as the switching operation is concerned.

The dithiolene is affected by the actuating radiation and it changes its refractive index in the presence of the actuating radiation. When the dithiolene changes its refractive index, the index of the total operative composition also changes. The concentration of the dithiolene is selected so as to produce the change or index needed to actuate the switch. In most cases the change of index is within the range $10^{-5}$ - $10^{-1}$ and 1% to 100% of dithiolene usually gives changes of this magnitude.

A critical region may be located either in a path region or a confining region. Thus the dithiolene compositions (used according to the invention) are used in conjunction with other materials which form the rest of the device; these materials are selected to accommodate the wavelength for which the switch device is designed. The dithiolene compositions are compatible with most of the materials used in switching devices, eg inorganic glasses such as silicates, borosilicates, silica and germania glasses as well as halide, especially fluoride, glasses. Plastics, eg the materials used as hosts, may also be used as other materials in the switch. The invention includes not only the optical switches but also the novel dithiolene/host compositions.

The invention will now be described by way of example with reference to the accompanying drawings in which:

Figure 1, as mentioned above, shows the generic formula of the dithiolenes;
Figure 2 is a cross section through a conventional switching device showing the layers;
Figure 3 is a cross section through the device of Figure 2 showing the arrangement of path regions in the device shown in Figure 2.
Figures 4-7 show structural formulae of dithiolenes suitable for use in the critical regions of switches.

Figure 8 shows the generic formula of the dithiolene ring system,

Figure 9 shows the generic formula of polymeric dithiolenes, and Figure 10 shows the formula of an intermediate.

Figures 2 and 3 illustrate architectures suitable for use in a switch according to the invention. The switch is constructed out of an etched wafer and Figure 2 is a cross section through the layers of the wafer.

The switch has a silica substrate 10 with ridges 11 and 12 of silica/germania to act as path regions. As is conventional, a critical region 13 is located between the two path regions 11 and 12.

The critical region is operatively linked to both path regions 11 and 12 and, if desired, it could extend further into either or both path regions. In accordance with this invention, the active ingredient in the critical zone is a dithiolene, e.g. one having the generic formula shown in Figure 1 or Figure 9. The path regions 11 and 12 and the critical region 13 are covered by a protective layer 14, eg a plastics layer. The protective layer 14 and the substrate 10 co-operate to form a confining region which hinders radiation leakage from the path regions 11 and 12 and the critical region 13.

The device is further illustrated in Figure 3 which shows that path region 11 has an input port 16 which can be connected to a source of telecommunications traffic (not shown) and an output port 17 to which a first output device (not shown) can be connected. Path 12 has an input port 18 adapted for attachment to a control laser (not shown) for conveying actuating radiation to the critical region 13. Path 12 has an output port 19 which can be connected to a second output device (not shown). Many other architectures and modes of implementation are well known to those skilled in the art.

To prepare a device, a uniform layer of silica/germania, indicated by 15 in Figure 2, was deposited onto a silica substrate 10. Using well established masking and etching techniques the unwanted parts of the uniform layer 15 were removed to form path regions 11 and 12. After the active composition is introduced into the critical region 13 the protective layer 14 is applied.

In the use of the device for telecommunications, traffic, ie an optical signal, is launched into path 11. Actuating radiation, provided by a switched laser, is launched into path 12. When radiation is present in both paths 11 and 12, ie when the laser is switched on, their evanescent fields interfere in the critical region 13. As a result of the interference the signal radiation which enters at port 18 can be switched to either output port 17 or output port 19. It is emphasised that the configurations and architectures are well known to persons skilled in the art. Complex devices involving several switches are also known. This invention resides in the material selected for the critical zone, ie materials which interact favourably with the signal and the actuating radiation.

Figures 4, 5, 6 and 7 give the structural formulae of four different dithiolenes, hereinafter identified as DTL1, DTL2, DTL3 and DTL4, particularly suitable for use in compositions according to the invention.

There are certain critical operational requirements for switches and the selection of the material is important to achieve these requirements. The most important requirements are mentioned in Table I.

TABLE I

| | |
|---|---|
| Actuating Power | less than 100mW |
| Switching Time | less than 100ps |
| Transmission | at least 80% |
| Diameter of Path Region | 2μm to 10μm |

In Table I the "actuating power" is the optical power which is present in the critical region and necessary to cause switching. In practical applications it can be taken as the power which the actuating laser must supply. The "transmission" is the percentage of the signal power (provided at port 16) which appears at the selected output port 17 or 19 as the case may be. The "switching time", represented by T in this specification, indicates how long it takes for the switch to pass from one state to the other. It is a characteristic of the material.

The requirements specified in Table I are affected by certain parameters of the active ingredient. These parameters are:

(a) $n_2$ = non-linear refractive index ($cm^2/kW$);

(b) $\alpha$ = linear absorption coefficient ($cm^{-1}$);

(c) $\beta$ = two photon absorption coefficient (cm/gW). These parameters, measured at 1.06μm, are given for each of the four exemplified dithiolenes, in Table II.

TABLE II

| Compound | $n_2$ | $\alpha$ | $\beta$ |
|---|---|---|---|
| DTL1 | $2.1 \times 10^{-7}$ | 600 | < 10 |
| DTL2 | $1.9 \times 10^{-7}$ | 400 | < 10 |
| DTL3 | $5.1 \times 10^{-7}$ | 1250 | 1400 |
| DTL4 | $4.2 \times 10^{-7}$ | 4000 | < 10 |

All four compounds have a switching time below 50ps.

Two ratios, which are calculated from $n_2$, $\alpha$ and $\beta$, are important for satisfactory performance.

Ratio 1, which is defined by $n_2/\alpha$, relates to the "transmission" mentioned in Table 1 above. From theoretical considerations, verified by practical experience, it is known that Ratio 1 must be greater than $10^{-10}$ for satisfactory performance.

Ratio 2, defined by $(2\beta)/n_2$, relates to whether or not switching is possible at all. Ratio 2 must be less than 10 and, for good performance, preferably less than 1.

Table III gives Ratios 1 and 2 for the four dithiolenes.

TABLE III

| | RATIO 1 | RATIO 2 |
|---|---|---|
| DTL1 | $3.5 \times 10^{-10}$ | $10^{-2}$ |
| DTL2 | $5 \times 10^{-10}$ | $10^{-2}$ |
| DTL3 | $4 \times 10^{-10}$ | 5 |
| DTL4 | $1 \times 10^{-10}$ | $5 \times 10^{-3}$ |

When the active ingredient is mixed with a host to give an active composition, the parameters quoted in Table II are "diluted" accordingly. Thus for x% of active ingredient the parameters of the active composition are x% of the parameters of the pure compounds. It will be noted that Ratios 1 and 2 are not, therefore, affected by dilution which means that dilution by a host does not fundamentally affect the basic suitability. The host is important to provide a predetermined refractive index for the active composition and to facilitate processing during the formation of the switch.

A final consideration needs to be mentioned. Ideally, all the output energy should appear at the selected output port and no energy should emerge via non-selected directions. In practice it is good enough for the non-selected energy to be below a threshold.

To achieve switching, the length of the critical zone and the intensity of actuating radiation must be correctly selected and this requires that:

$$2T = (n_2 I L)/\lambda$$

where $\lambda$ is the operational wavelength (in the medium in question), L is the length of the critical region and I is the total intensity of radiation in the critical region. As stated above, dilution decreases $n_2$ but I and/or L can be increased to compensate. In most cases it is convenient to increase L. Dilution limits are reached when L becomes too big. Pure DTL1 gave good switching at 1.06µm wavelength using 100mW of optical power into a path region 3.5µm in diameter with a path length of 1µm in the critical region.

Other dithiolenes, for which satisfactory values of $n_2$, $\alpha$ and $\beta$ have been measured, are identified with reference to Figure 1.

(I) Neutral species, ie c=o,

| M | R | All X |
|---|---|---|
| Ni | 4-bromophenyl | S |
| Pt | Phenyl | S |
| Pt | Methyl | S |
| Pd | Phenyl | S |
| Ni | 4-octylphenyl and methyl | S |

In the last item there is one 4-octylphenyl and one methyl group attached to each ring.

(II) Charged species, ie c= -1,

| M | Y | R | All X |
|---|---|---|---|
| Ni | TEA | phenyl | S |
| Ni | $Li^+$ or $Na^+$ | CN | S |
| Pt | TBA | CN | S |
| Ni | $K^+$ or TBA | $CF_3$ | S |
| Ni | TBA | $CF_3$ | Se |

In this listing

TEA = tetraethyl-ammonium
TBA = tetrabutyl-ammonium

The dithiolenes are known as a class of compounds and their chemistry is discussed in:

(1) J A McCleverty, "Metal 1,2 Dithiolene and Related Complexes", Progress in Inorganic Chemistry, Vol. 10, pp49 (1968), and
(2) U.T. Mueller-Westerhoff and B. Vance, "Dithiolenes and Related Species", in "Comprehensive Co-ordination Chemistry Vol. II", Pergamon Press (Oxford), pp 595-608.

Reference (2) provides substantial information about the synthesis.
A summary of twenty active compounds is given in Table 1. In Table 1 R, M, C, Y and X refer to formula 1 and gives the wave length of the absortion band.
The shortest switching time of a device is limited by the response time of the active material. The response times of all the materials listed in Table 1 was measured by autocorrelation experiments using 100 ps pulses and the results were limited by the pulse width, i.e. each response time was less than 50ps. The observations suggest that the response times were about 1 - 2 ps.

TABLE 1

| CODE | R | M | C | Y | X | $\lambda$ |
|---|---|---|---|---|---|---|
| 1 | methyl | Pt | 0 | - | S | 780 |
| 2 | phenyl | Pt | 0 | - | S | 780 |
| 3 | phenyl | Pd | 0 | - | S | 885 |
| 4 | methyl | Ni | 0 | - | S | 770 |
| 5 | ethyl | Ni | 0 | - | S | 770 |
| 6 | phenyl and methyl | Ni | 0 | - | S | 795 |
| 7 | phenyl & decyl | Ni | 0 | - | S | 800 |
| 8 | OPh & methyl | Ni | 0 | - | S | 805 |
| 9 | phenyl | Ni | 0 | - | S | 865 |
| 10 | H & OPh | Ni | 0 | - | S | 865 |
| 11 | 4BrPh | Ni | 0 | - | S | 870 |
| 12 | H & BPh | Ni | 0 | - | S | 870 |
| 13 | 4MPh | Ni | 0 | - | S | 900 |
| 14 | 4MOPh | Ni | 0 | - | S | 935 |
| 15 | CN & phenyl | Ni | -1 | TBA | S | 905 |

Continuation of the Table on the next page

TABLE 1 (continued)

| CODE | R | M | C | Y | X | λ |
|---|---|---|---|---|---|---|
| 16 | CN | Pt | -1 | TEA | S | 865 |
| 17 | H | Ni | -1 | TEA | S | 870 |
| 18 | phenyl | Ni | -1 | TEA | S | 930 |
| 19 | CF3 | Ni | -1 | TEA | S | 800 |
| 20 | CF3 | Ni | -1 | TBA | Se | 800 |

TEA = tetraethylammonium
TBA = tetrabotylammonium
OPh = Octylphenyl
4BrPh = 4-bromophenyl
BPh = butylphenyl
4MPh = 4-methylphenyl
4MOPh = 4-methoxyphenyl

Several films were prepared to illustrate the film forming properties of host/dithiolene mixtures according to the invention.

Compounds, 1, 7 and 14 as specified in Table 1 were blended with polymethylmethacrylate, polystyrene, polyvinylacetate in concentrations covering the range 1 x $10^{18}$ to 2 x $10^{19}$ molecules of the active material per cubic centimetre of the composition. These blends were spun and cast into films 1 to 120μm thick. These films displayed optical activity comensurate with the concentration of the active ingredient. A polymer as shown in Figure 9 was prepared. In this polymer

(a) all X's were S,
(b) all M's were Ni,
(c) all R's were H,
(d) all A's were $-6_6H_4-$ (para),
(e) all B's were $-CH_2-$,
(f) n was of the order 50,
(g) all C's were zero (and Y was absent);

It has a response time below 50ps. Its preparation will be described briefly with reference to Figure 10 Diphenylmethane was reacted with $Cl-CO-CH_2Cl$ using $AlCl_3$ as catalyst in a Friedel Crafts reaction to give the product shown in Figure 10. This was converted into the final product using a conventional two-stage reaction scheme for the preparation of dithiolenes. Stage 1 used $C_2H_5OCS_2K$ together with a mixture of HBr and acetic acid to replace the $Cl-CH_2-CO$ - groups by sulphur-containing heterocyclic rings.

Stage 2 used Na dissolved in methanol and $NiCl_2$ with iodine as catalyst to convert two of the heterocyclic rings into a dithiolene ring system. Since the compound shown in Figure 10 contains two heterocyclic groups, polymerisation occurs.

## Claims

**1.** An optical switch having one or more path regions (11,12) and at least one critical region (13) adapted for the controlled transfer of optical energy, each of said critical regions being operatively associated with at least one of said path regions and formed of an active composition, characterised in that said active composition is composed of 1-100% of an active ingredient and a host, wherein the active ingredient contains one or more groupings having the generic formula:-

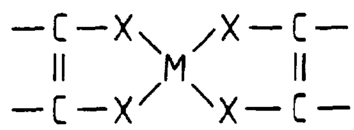

wherein the M atoms, any two of which may be the same or different, are selected from Ni, Pt, Pd and Cu and the X groups, any two of which may be the same or different, are selected from S and Se.

2. An optical switch according to claim 1, wherein the said active ingredient is one or more groupings having the generic formula

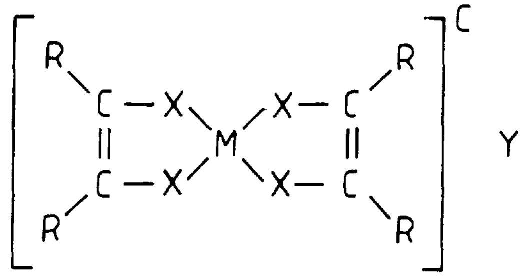

wherein

(A) the R groups, any two of which may be the same or different, are selected so as to tune the absorption bands of the molecule for use at the operational wavelength and/or to act as bridges to link molecules together;
(B) the X groups, are as defined in claim 1;
(C) M is as defined in claim 1;
(D) C = -1 or 0; and
(E) when C = -1, Y is a cation to confer electrical neutrality on the molecule.

3. An optical switch according to claim 2, wherein the host is an organic transparent polymer and the R-groups are selected from: -

(i) hydrogen atoms;
(ii) alkyl groups or halogenated alkyl groups with 1 to 10 carbon atoms, said groups being connected directly to the ring.
(iii) alkyl groups or halogenated alkyl groups with 1 to 10 carbon atoms connected to the ring via a bridge selected from -O-, $-C_6H_4-$ and -NH-;
(iv) cyanide radicals;
(v) amine groups, optionally substituted with two alkyl groups having not more than 15 carbon atoms in total;
(vi) Phenyl groups, optionally substituted with Br, $OCH_3$, $N(CH_3)_2$, $CH_3$, Cl, F;
(vii) heterocyclic groups;
(viii) halogen atoms;
(ix) bridge groups preferably selected from alkylene or halogenated alkylene groups with 1 - 10 carbon atoms or said groups with one or two terminal groups selected from

-O-, $-C_6H_4-$, and -NH-.

4. A switch according to any one of the preceding claims in which all of the X-groups of the active ingredient represent S.

5. A switch according to claim 4, wherein the active ingredient has any one of the formulae

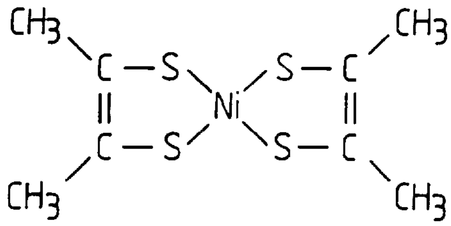

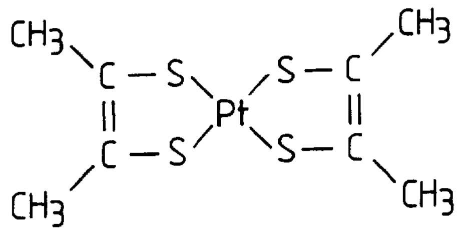

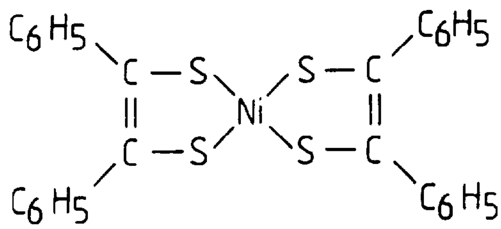

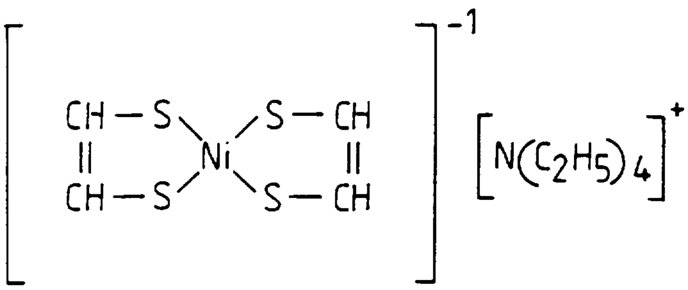

6. A switch according to any one of the preceding claims, wherein the host is selected from polyacrylates, polymethacrylates, polycarbonates, polyisobutylene, polyethylene terephthalate, polystyrene and polysiloxane.

7. The use of an active material in the critical region of an optical switch, wherein the active material contains one or more groupings having the formula

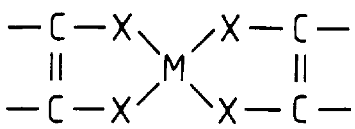

wherein the M atoms, any two of which may be the same or different, are selected from Ni, Pt, Pd and Cu and the X groups, any two of which may be the same or different, are selected from S and Se.

8. The use according to claim 7, wherein the active material contains a single grouping and it has the generic formula: -

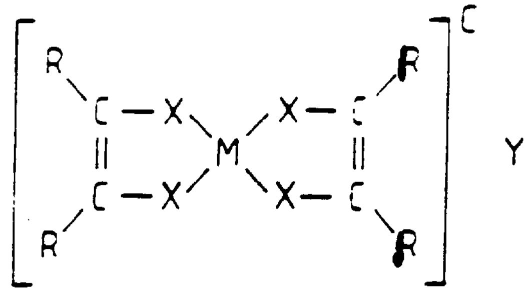

wherein

(A) the R groups, any two of which may be the same or different, are selected so as to tune the absorption bands of the molecule for use at the operational wavelength;
(B) the X groups, any two of which may be the same or different, are selected from S and Se;
(C) M is selected from Ni, Pt, Pd and Cu;
(D) C = -1 or 0; and
(E) when C = -1, Y is a cation to confer electrical neutrality on the molecule.

**9.** A switch according to any one of claims 1 to 6, wherein the response time of the active ingredient is less than 50ps.

**Patentansprüche**

**1.** Optischer Schalter, der eine oder mehrere Lichtwegbereiche (11, 12) und mindestens einen kritischen Bereich (13) aufweist, der zur gesteuerten Übertragung optischer Energie ausgebildet ist, wobei jeder der kritischen Bereiche operativ mit mindestens einem der Lichtwegbereiche verbunden und aus einer Wirkstoffzusammensetzung gebildet ist,
dadurch gekennzeichnet,
daß die Wirkstoffzusammensetzung aus 1 bis 100 % eines Wirkstoffs und einer Wirtskomponente besteht, wobei der Wirkstoff eine oder mehrere Gruppierungen der allgemeinen Formel

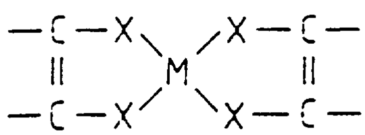

enthält, wobei die Atome M, von denen beliebige zwei gleich oder verschieden sein können, unter Ni, Pt, Pd und Cu ausgewählt sind und die Gruppen X, von denen beliebige zwei Gruppen gleich oder verschieden sein könnnen, unter S und Se ausgewählt sind.

**2.** Optischer Schalter nach Anspruch 1, wobei der Wirkstoff eine oder mehrere Gruppierugen der allgemeinen Formel

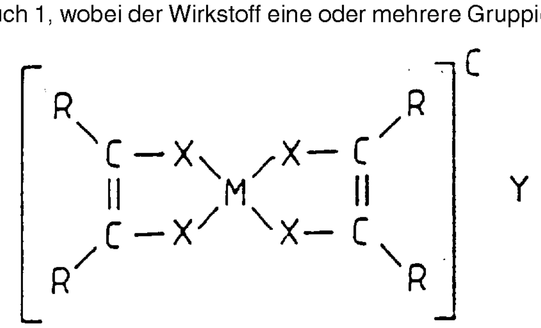

darstellt, wobei

(A) die Gruppen R, von denen beliebige zwei Gruppen gleich oder verschieden sein können, derart ausgewählt sind, daß sie die Absorptionsbanden des Moleküls für eine Verwendung bei der Betriebswellenlänge abstimmen

und/oder als Brücken wirken, um Moleküle miteinander zu verknüpfen,
(B) die Gruppen X wie in Anspruch 1 definiert sind,
(C) M wie in Anspruch 1 definiert ist,
(D) C gleich -1 oder gleich 0 ist und
(E) wenn C gleich -1 ist, Y ein Kation ist, wodurch das Molekül elektrisch neutral wird.

**3.** Optischer Schalter nach Anspruch 2, wobei die Wirtskomponente ein organisches transparentes Polymer ist und die Gruppen R ausgewählt sind unter:

(i) Wasserstoffatomen,
(ii) Alkylgruppen oder halogenierten Alkylgruppen mit 1 bis 10 Kohlenstoffatomen, wobei die Gruppen direkt am Ring gebunden sind,
(iii) Alkylgruppen oder halogenierten Alkylgruppen mit 1 bis 10 Kohlenstoffatomen, wobei die Gruppen über eine Brücke mit dem Ring verbunden sind, die unter -O-, -$C_6H_4$- und -NH- ausgewählt ist,
(iv) Cyanidradikalen,
(v) Aminogruppen, die wahlweise mit zwei Alkylgruppen substituiert sind, die insgesamt nicht mehr als 15 Kohlenstoffatome aufweisen,
(vi) Phenylgruppen, die wahlweise mit Br, $OCH_3$, $N(CH_3)_2$, $CH_3$, Cl, F substituiert sind,
(vii) heterocyclischen Gruppen,
(viii) Halogenatomen,
(ix) Brückengruppen, die bevorzugt unter Alkylen- oder halogenierten Alkylengruppen mit 1 bis 10 Kohlenstoffatomen ausgewählt sind, oder Gruppen, die eine oder zwei endständige Gruppen aufweisen, die unter -O-, -$C_5H_4$- und-NH- ausgewählt sind.

**4.** Optischer Schalter nach einem der vorhergehenden Ansprüche, wobei alle Gruppen X des Wirkstoffs S darstellen.

**5.** Optischer Schalter nach Anspruch 4, wobei der Wirkstoff eine der folgenden Formeln aufweist:

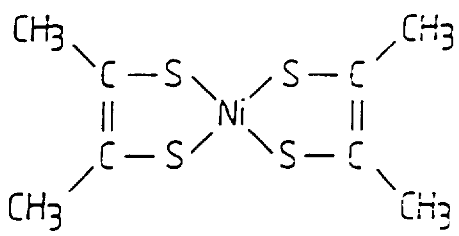

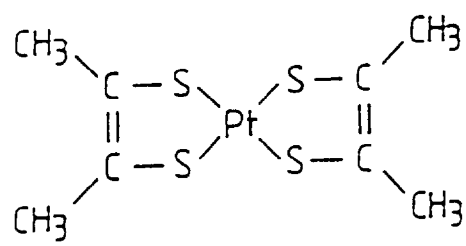

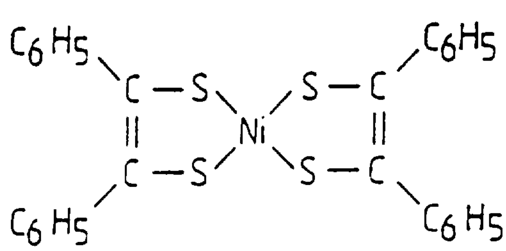

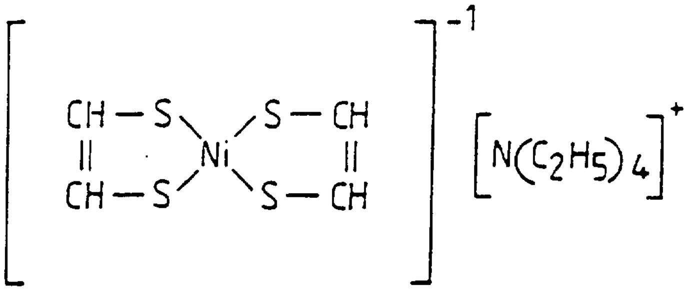

6. Optischer Schalter nach einem der vorhergehenden Ansprüche, wobei die Wirtskomponete unter Polyacrylaten, Polymethacrylaten, Polycarbonaten, Polyisobutylen, Polyethylen-terephthalat, Polystyrol und Polysiloxan ausgewählt ist.

7. Verwendung eines Wirkstoffs im kritischen Bereich eines optischen Schalters, wobei der Wirkstoff eine oder mehrere Gruppierungen der Formel

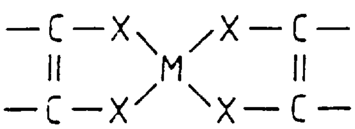

enthält, wobei die Atome M, von denen beliebige zwei Atome gleich oder verschieden sein können, unter Ni, Pt, Pd und Cu ausgewählt sind und die Gruppen X, von denen beliebige zwei Gruppen gleich oder verschieden sein können, unter S und Se ausgewählt sind.

8. Verwendung nach Anspruch 7, wobei der Wirkstoff eine einzige Gruppierung enthält und die allgemeine Formel

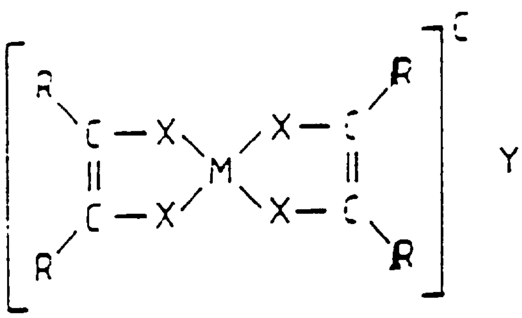

aufweist, wobei

(A) die Gruppen R, von denen beliebige zwei Gruppen gleich oder verschieden sein können, derart ausgewählt sind, daß sie die Absorptionsbanden des Moleküls für eine Verwendung bei der Betriebswellenlänge abstimmen,
(B) die Gruppe X, von denen beliebige zwei Gruppen gleich oder verschieden sein können, unter S und Se ausgewählt sind,
(C) M unter Ni, Pt, Pd und Cu ausgewählt ist,
(D) C gleich -1 oder gleich 0 ist und
(E) wenn C gleich -1 ist, Y ein Kation ist, wodurch das Molekül elektrisch neutral wird.

9. Schalter nach einem der Ansprüche 1 bis 6, wobei die Ansprechzeit des Wirkstoffs unter 50 ps liegt.

## Revendications

**1.** Un commutateur optique ayant une ou plusieurs régions de cheminement (11, 12) et au moins une région critique (13) destinée au transfert commandé d'énergie optique entre lesdites régions de cheminement, chacune desdites régions critique étant associée fonctionnellement à au moins l'une desdites régions de cheminement et formée d'une composition active, caractérisé en ce que ladite composition active est constituée de 1 à 100 % d'un ingrédient actif et d'un hôte, l'ingrédient actif contenant un ou plusieurs groupements répondant à la formule générale :

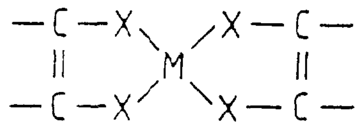

dans laquelle les atomes M, dont deux quelconques peuvent être identiques ou différents, sont choisis parmi Ni, Pt, Pd et Cu, et les groupes X, dont deux quelconques peuvent être identiques ou différents, sont choisis parmi S et Se.

**2.** Un commutateur optique selon la revendication 1, dans lequel ledit ingrédient actif est constitué d'un ou plusieurs groupements répondant à la formule générale :

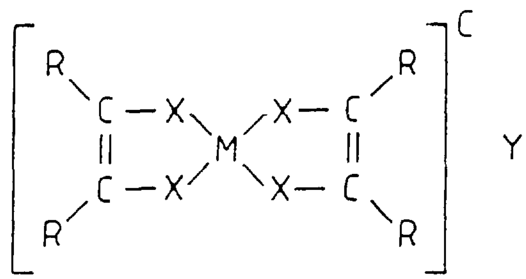

dans laquelle

(A) les groupes R, dont deux quelconques peuvent être identiques ou différents, sont choisis afin d'accorder les bandes d'absorption de la molécule pour l'utilisation à la longueur d'onde de fonctionnement et/ou afin d'agir comme des ponts pour relier des molécules ensemble ;
(B) les groupes X sont tels que définis dans la revendication 1 ;
(C) M est tel que défini dans la revendication 1 ;
(D) C = -1 ou 0 ; et
(E) lorsque C = -1, Y est un cation qui confère la neutralité électrique à la molécule.

**3.** Un commutateur optique selon la revendication 2, dans lequel l'hôte est un polymère organique transparent et les groupes R sont choisis parmi :

(i) des atomes d'hydrogène ;
(ii) des groupes alkyle ou des groupes alkyle halogénés ayant 1 à 10 atomes de carbone, ces groupes étant fixés directement au cycle ;
(iii) des groupes alkyle ou des groupes alkyle halogénés ayant 1 à 10 atomes de carbone reliés au cycle par l'intermédiaire d'un pont choisi parmi -O-, $-C_6H_4-$ et -NH- ;
(iv) des radicaux cyanure ;
(v) des groupes amino facultativement substitués par deux groupes alkyle n'ayant pas plus de 15 atomes de carbone au total ;
(vi) des groupes phényle facultativement substitués par Br, $OCH_3$, $N(CH_3)_2$, $CH_3$, Cl, F ;
(vii) des groupes hétérocycliques ;
(viii) des atomes d'halogènes ;
(ix) des groupes pontants choisis parmi les groupes alkylène ou alkylène halogénés ayant 1 à 10 atomes de carbone ou lesdits groupes ayant un ou deux groupes terminaux choisis parmi -O-, $-C_6H_4-$ et -NH-.

**4.** Un commutateur selon l'une quelconque des revendications précédentes, dans lequel tous les groupes X de l'ingrédient actif représentent S.

**5.** Un commutateur selon la revendication 4, dans lequel l'ingrédient actif répond à l'une quelconque des formules

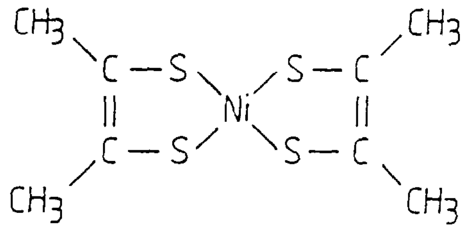

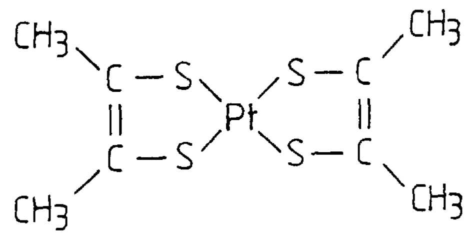

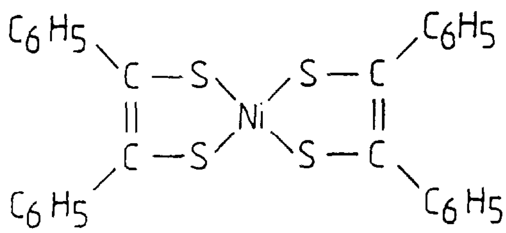

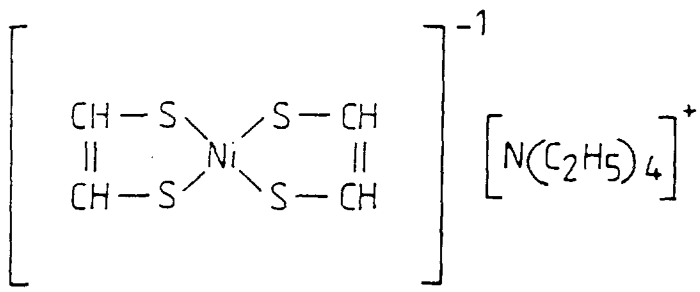

**6.** Un commutateur selon l'une quelconque des revendications précédentes, dans lequel l'hôte est choisi parmi les polyacrylates, les polyméthacrylates, les polycarbonates, le polyisobutylène, le polytéréphtalate d'éthylène, le polystyrène et un polysiloxane.

**7.** L'utilisation d'une matière active dans la région critique d'un commutateur optique, dans laquelle la matière active contient un ou plusieurs groupements répondant à la formule

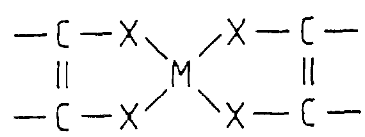

dans laquelle les atomes M, dont deux quelconques peuvent être identiques ou différents, sont choisis parmi Ni, Pt, Pd et Cu, et les groupes X, dont deux quelconques peuvent être identiques ou différents, sont choisis parmi S et Se.

**8.** L'utilisation selon la revendication 7, dans laquelle la matière active contient un seul groupement et répond à la formule générale :

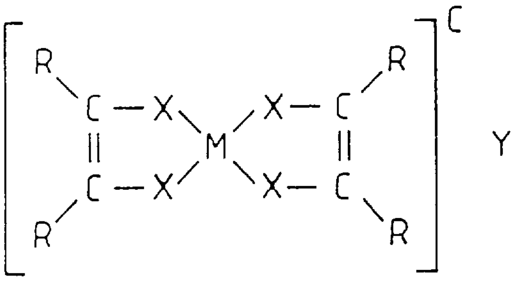

dans laquelle

(A) les groupes R, dont deux quelconques peuvent être identiques ou différents, sont choisis afin d'accorder les bandes d'absorption de la molécule pour l'utilisation à la longueur d'onde de fonctionnement ;
(B) les groupes X, dont deux quelconques peuvent être identiques ou différents, sont choisis parmi S et Se ;
(C) M est choisi parmi Ni, Pt, Pd et Cu ;
(D) C = -1 ou 0 ; et
(E) lorsque C = -1, Y est un cation qui confère la neutralité électrique à la molécule.

**9.** Un commutateur selon l'une quelconque des revendications 1 à 6, dans lequel le temps de réponse de l'ingrédient actif est inférieur à 50 ps.

Fig. 1.

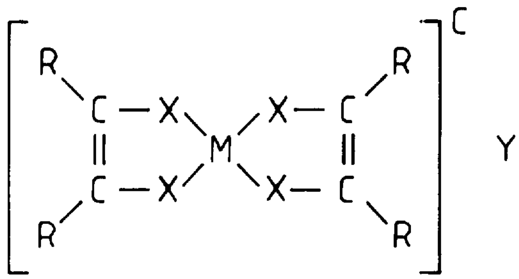

Fig. 4.

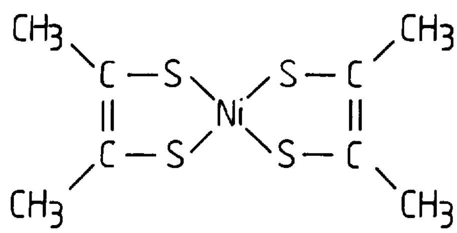

DTL1

Fig. 5.

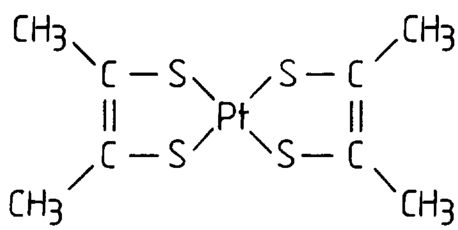

DTL2

Fig. 6.

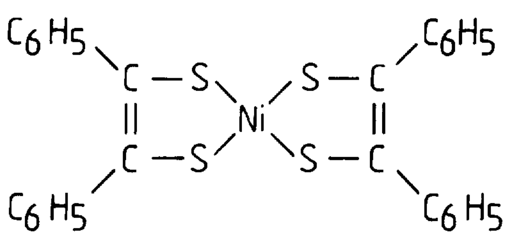

DTL3

Fig. 2.

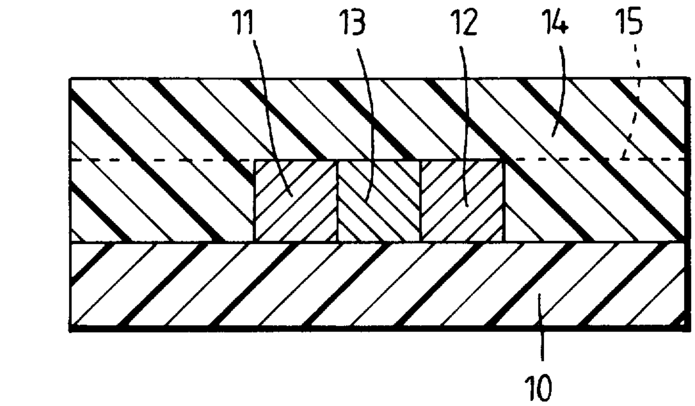


Fig. 3.

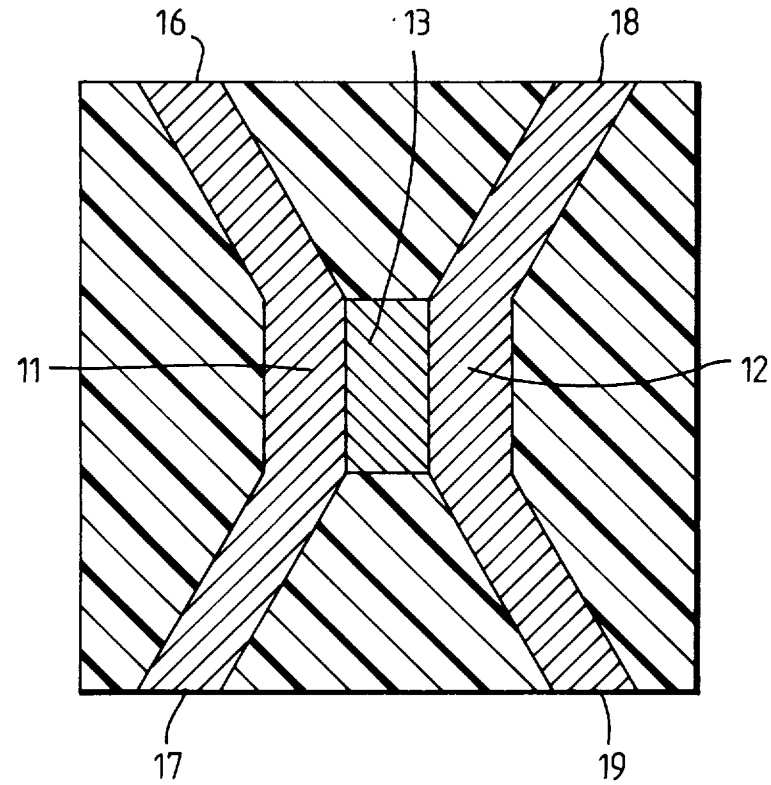

*Fig. 7.*

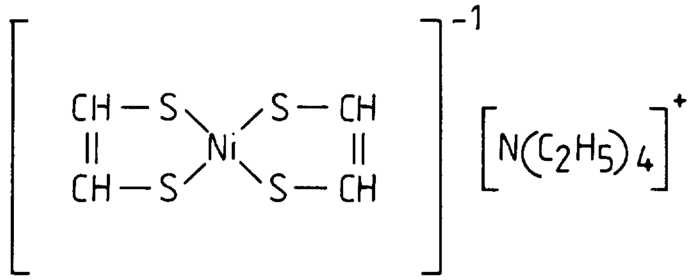

DTL4

*Fig. 8.*

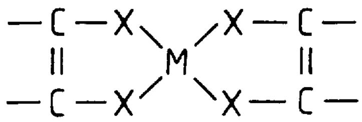

*Fig. 9.*

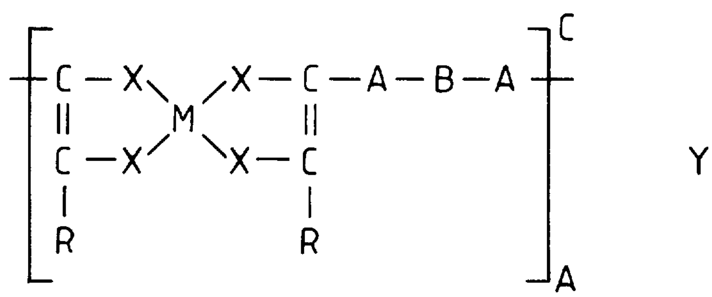

*Fig. 10.*